Europäisches Patentamt

European Patent Office

Office européen des brevets

(19)

(11) **EP 1 249 079 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(21) Anmeldenummer: **01909474.7**

(22) Anmeldetag: **15.01.2001**

(51) Int Cl.⁷: **H04B 1/707**

(86) Internationale Anmeldenummer:
**PCT/DE2001/000153**

(87) Internationale Veröffentlichungsnummer:
**WO 2001/054287 (26.07.2001 Gazette 2001/30)**

(54) **VERFAHREN UND VORRICHTUNG ZUR ERMITTLUNG DER TRÄGERFREQUENZ VON BASISSTATIONEN IM MOBILEN EMPFÄNGER EINES MIT W-CDMA ARBEITENDEN ZELLULAREN MOBILFUNKSYSTEMS**

METHOD AND DEVICE FOR DETERMINING THE CARRIER FREQUENCY OF BASE STATIONS IN THE MOBILE RECEIVER OF A CELLULAR MOBILE TELEPHONY SYSTEM WORKING WITH W-CDMA

PROCEDE ET DISPOSITIF POUR DETERMINER LA FREQUENCE PORTEUSE DE STATIONS DE BASE DANS LE RECEPTEUR MOBILE D'UN SYSTEME RADIOTELEPHONIQUE MOBILE CELLULAIRE W-CDMA

(84) Benannte Vertragsstaaten:
**AT BE CH CY DE DK ES FI FR GB GR IE IT LI LU MC NL PT SE TR**

(30) Priorität: **18.01.2000 DE 10001854**

(43) Veröffentlichungstag der Anmeldung:
**16.10.2002 Patentblatt 2002/42**

(73) Patentinhaber: **Infineon Technologies AG**
**81669 München (DE)**

(72) Erfinder:
- **DOETSCH, Markus**
  **CH-3098 Schliern (CH)**
- **JUNG, Peter**
  **67697 Otterberg (DE)**

- **KELLA, Tideya**
  **80337 München (DE)**
- **PLECHINGER, Jörg**
  **80469 München (DE)**
- **SCHMIDT, Peter**
  **67167 Erpolzheim (DE)**
- **SCHNEIDER, Michael**
  **81541 München (DE)**

(74) Vertreter: **Lange, Thomas, Dr. et al**
**Patentanwälte**
**Lambsdorff & Lange,**
**Dingolfinger Strasse 6**
**81673 München (DE)**

(56) Entgegenhaltungen:
**EP-A- 0 892 528**          **WO-A-98/36580**
**WO-A-99/12273**          **WO-A-99/12295**

**Beschreibung**

Die vorliegende Erfindung betrifft ein Verfahren und eine Vorrichtung zur Ermittlung der Trägerfrequenz von Basisstationen im mobilen Empfänger eines mit W-CDMA arbeitenden zellularen Mobilfunksystems.

Die vorliegende Erfindung betrifft mobile Empfänger für zellulare Mobilfunksysteme mit W-CDMA (Wide band code division multiple access = breitbandiges Codevielfachzugriffsverfahren), wie es beispielsweise in der Literatur in P. Jung "Analyse und Entwurf digitaler Mobilfunksysteme", B.G. Täubner-Verlag, Stuttgart, 1997 und in der Zeitschrift IEEE Transactions on vehicular technology, Band 47, Nr. 4 vom November 1998 in dem Artikel "W-CDMA - The radio interface for future mobile multimedia communications" ausführlich beschrieben ist. Dieses Verfahren ist von erheblicher Bedeutung, denn es soll den weltweiten Standard für die Mobilfunktechnik der dritten Generation bilden, wie dies in IEEE Transactions on vehicular technology, Band 47, Nr. 4 vom November 1998 in dem Artikel "UMTS Universal mobile telecommunication system: Development of standards for the third generation" erläutert ist.

Bei diesen neuartigen Betriebsverfahren für den Mobilfunk stellt sich das Problem, daß beim erstmaligen Einschalten des mobilen Empfängers dieser keinerlei Informationen über die Frequenz und die Zeitlage der Übertragungen der umgebenden Basisstationen hat. Der mobile Empfänger muß daher eine Anfangssysnchronisation (Initial cell search) durchführen, um diejenige Basisstation, deren Signale am stärksten einfallen und die zugehörige Zeitsynchronisation dieser Basisstation zu ermitteln. Diese Aufgabe gehört zu den schwierigsten und rechenzeitaufwendigsten Aufgaben für den mobilen Empfänger in einem W-CDMA-Mobilfunksystem.

Aufgabe der vorliegenden Erfindung ist es daher, ein Verfahren und eine Vorrichtung für die aufwandsgünstige Suche nach der Trägerfrequenz derjenigen Basisstation zu finden, zu der sich der mobile Empfänger synchronisieren soll.

Erfindungsgemäß wird diese Aufgabe dadurch gelöst, daß zuerst die Trägerfrequenz des Hauptsynchronisationskanals (pSCH) und die Zeitsynchronisation der am stärksten einfallenden Basisstation gesucht wird, indem eine Trägerfrequenz-Hypothesierung vorgenommen wird, für die Mehrzahl von hypothetischen Trägerfrequenzen eine nichtkohärente Korrelation der Inphase- und Quadraturkomponente des Empfangssignals mit dem Hauptsynchronisationscode über eine sehr große Anzahl von Codeelementen (chips) des Signals durchgeführt wird und die Trägerfrequenz-Hypothesierung mithilfe eines iterativen Verfahrens durch die Auswahl des Bandes mit der höchsten Energie verfeinert wird.

Es ist dabei besonders bevorzugt, daß durch Ermittlung des Maximalwerts der Spitzen im Ausgangssignal der Korrelation die Zeitsynchronisation der am stärksten einfallenden Basisstation modulo der Zeitrahmen-(slot-)länge gewonnen wird.

Dabei ist es besonders bevorzugt, die iterative Suche nach dem Hauptsynchronisationskanal (pSCH) zuerst in groben Frequenzschritten durchzuführen, wobei die Energie des Korrelationsergebnisses in Abständen von jeweils etwa 1 MHz gemessen wird, und sodann das Band mit der höchsten Energie ausgewählt wird, und dieses in Abständen von jeweils etwa 100 KHz gemessen wird, und wiederum das Band mit der höchsten Energie ausgewählt wird, welches dann mit Abständen von jeweils etwa 10 KHz gemessen wird, und der Wert mit der höchsten Energie als Hypothese für die Empfänger-Trägerfrequenz ausgewählt wird. Auf diese Weise läßt sich die Trägerfrequenz des Hauptsynchronisationskanals (pSCH) besonders schnell und einfach ermitteln.

Es ist dabei besonders bevorzugt, die Korrelation über 2.560 Codeelemente des Signals durchzuführen.

Weiter ist es besonders bevorzugt, nach Ermittlung der Trägerfrequenz des Haupt-Synchronisationskanals und der Zeitsynchronisation der am stärksten einfallenden Basisstation anhand des Neben-Synchronisationskanals die Rahmensynchronisation und die Codegruppe dieser Basisstation zu ermitteln.

Die erfindungsgemäße Aufgabe kann auch durch eine Vorrichtung zur Ermittlung der Trägerfrequenz von Basisstationen für einen mobilen Empfänger eines mit W-CDMA arbeitenden zellularen Mobilfunksystems gelöst werden, bei der mindestens eine entsprechende Suchvorrichtung vorgesehen ist, die Vorrichtungen zur Demodulation des physikalischen gemeinsamen Hauptsteuerkanals, zur Korrelation der verschiedenen Pfadlaufzeiten, zur Identifikation des Verwürfelungscodes, zur Ermittlung der Zeitrahmensynchronisation und zur Schätzung der Signallaufzeit umfaßt.

Besonders bevorzugt ist es, wenn bei dem erfindungsgemäßen mobilen Empfänger zwei solche Suchvorrichtungen vorgesehen sind.

Die vorliegende Erfindung wird anhand des nachfolgend anhand der beigefügten Zeichnungen beschriebenen Ausführungsbeispiels näher erläutert. Es zeigen:

Fig. 1 eine schematische Darstellung der Suche nach dem Hauptsynchronisationscode mittels Korrelation;

Fig. 2 eine schematische Übersichtsdarstellung einer erfindungsgemäßen Suchvorrichtung;

Fig. 3 zeigt ein vereinfachtes Prinzipschaltbild eines erfindungsgemäßen Frequenzaquisitionssystems;

Fig. 4 zeigt eine vereinfachte schematische Darstellung der Breitbad-Signalverarbeitung der Fig. 3; und

Fig. 5 eine erfindungsgemäße Vorrichtung zur Zeitschlitzsynchronisation;

Die vorliegende Erfindung befaßt sich mit der Problematik, daß ein erstmals eingeschalteter Mobilfunkempfänger im Mobilfunksystemen nach dem UMTS-Standard (Mobilfunk der 3. Generation) keinerlei Information über die Frequenz und die Zeitsynchronisation der umgebenden Basisstationen hat. Der Mobilfunkempfänger muß also eine Anfangssynchronisation (Initial Cell Search) durchführen, um diejenige Basisstation, deren Signale am stärksten bei ihm einfallen, und die zugehörige Zeitsynchronisation zu ermitteln.

In dem UMTS-Standard ist der einzige bekannte Kanal, der von allen Basisstationen regelmäßig gesendet wird, der primäre oder Haupt-Synchronisationskanal (Primary synchronisation channel, pSCH). Es werden daher sowohl die Zeitsynchronisation als auch die Frequenzsynchronisation mit diesem Kanal durchgeführt.

Dabei ist zu beachten, daß die Zeitsynchronisation erst dann durchgeführt werden kann, wenn der Mobilfunkempfänger die Trägerfrequenz der entsprechenden Basisstation kennt, auf deren Zeitvorgabe synchronisiert werden soll.

Das erfindungsgemäße Verfahren hat daher die Aufgabe, zuerst einmal das gesamte Frequenzband nach dem Haupt-Synchronisationskanal der am stärksten einfallenden Basisstation zu durchsuchen. Zu diesem Zweck wird erfindungsgemäß die Energie der üblicherweise von verschiedenen Basisstationen kommenden Haupt-Synchronisationskanäle von dem Mobilfunkempfänger mit Hilfe von Korrelatoren auf den verschiedenen Trägerfrequenzen "gemessen". Um diese Suche schneller und einfacher durchführen zu können, wird erfindungsgemäß vorgeschlagen, diese mit unterschiedlicher Auflösung durchzuführen. Zuerst wird eine grobe Frequenzsynchronisation durchgeführt. Nach jedem solchen Synchronisationsschritt wird der Bereich, in dem die meiste Energie gemessen werden konnte, mit einer entsprechend feineren Auflösung als bei der vorhergehenden Suche nochmals durchsucht.

Der Vorteil bei dieser erfindungsgemäßen Durchführung der Frequenzsynchronisation liegt darin, daß die aufzuwendende Zeit für eine korrekte Synchronisation auf den Haupt-Synchronisationskanal der am stärksten einfallenden Basisstation gegenüber herkömmlichen Verfahren deutlich verringert wird.

Durch die in den Vorrichtungsansprüchen und in der folgenden Beschreibung dargestellte Hardwareimplementation ist außerdem eine Nutzung der gleichen Hardwarekomponenten für verschiedene Aufgaben möglich. Dadurch kann der schaltungstechnische Aufbau des Mobilfunkempfängers erheblich vereinfacht werden.

Die vorliegende Erfindung wird im folgenden in allen Einzelheiten dargestellt. Dazu sollen zuerst die Grundlagen der Signalerfassung und -verfolgung in einem W-CDMA (Wide band-code division multiple access = breitbandiger Codevielfachzugriff)-Empfänger beschrieben werden. Anschließend wird die detaillierte Ausführung der dargestellten Verfahren beschrieben werden.

Die Signalerfassung zerfällt im Grunde in drei Verfahrensschritte:

- Zellsuche am Anfang
- Zellsuche im Leerlaufbetrieb und
- Zellsuche im aktiven (Gesprächs-)betrieb.

Die anfängliche Zellsuche nach dem Neueinschalten des Mobilfunkempfängers wird nichtkohärent in den Suchvorrichtungen des Mobilfunkempfängers durchgeführt. Diese Maßnahme gliedert sich wiederum in drei kleinere Verfahrensschritte, nämlich

- Ermittlung der Frequenz und Zeitsynchronisation,
- Rahmensynchronisation und Identifikation der Codegruppe und
- Identifikation des Verwürfelungscodes.

Der erste dieser Schritte wird weiter unten detailliert beschrieben werden.

Im folgenden wird die Frequenzermittlung und Zeitsynchronisation im einzelnen beschrieben:

Die anfängliche Zellsuchprozedur, die im folgenden beschrieben wird, muß durchgeführt werden, nachdem der mobile Empfänger eingeschaltet worden ist oder nachdem die Verbindung vollständig abgebrochen ist. Außer Frequenz- und Zeitsynchronisation ergibt dieser Vorgang die Mengen der aktiven und Kandidaten-Basisstationen. Der Hypothesentest zur Ermittlung sowohl der Frequenz als auch der Lage der Zeitschlitze beruht auf einer nichtkohärenten Korrelation, die im folgenden als "Zeitschlitzsynchronisation" (Slot synchronisation) bezeichnet wird und die im folgenden zuerst beschrieben wird.

Während des ersten Schrittes des anfänglichen Zellsuchvorgangs, in dem nur eine der beiden erfindungsgemäß vorgesehenen Suchvorrichtungen aktiv ist, benutzt der mobile Empfänger den Hauptsynchronisationskanal pSCH um sowohl die Empfangsträgerfrequenz als auch die Zeitsynchronisation der am stärksten einfallenden Basisstation zu ermitteln. Dies erfolgt mittels nichtkohärenten Korrelatoren, die auf den Hauptsynchronisationskanal pSCH abgestimmt sind. Das empfangene Signal wird mit einer Inphase-(I)- und Quadratur-(Q)-Komponente über 2560 Codeelemente mit dem Hauptsynchronisationscode korreliert, um den Beginn eines Zeitschlitzes zu finden.

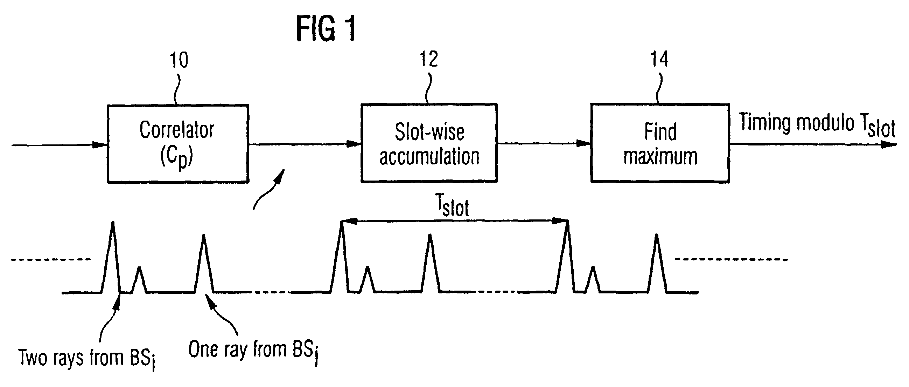

Der Ausgang des Korrelators wird Signal-Spitzen für jeden Ausbreitungspfad von jeder der Basisstationen innerhalb der Reichweite des mobilen Empfängers enthalten. In Fig. 1 unten ist ein entsprechendes Signal dargestellt, die beiden linken ist ein entsprechendes Signal dargestellt, die beiden linken Spitzen stammen von der Basisstation i, deren Signal sich auf zwei Pfaden unterschiedlicher Stärke zum mobilen Empfänger ausbreitet, die rechte Spitze stammt von einer Basisstation j deren Signal lediglich auf einem Weg eintrifft. Die Fig. 1 oben zeigt die einzelnen Verfahrensschritte, die mit dem Empfangssignal durchgeführt werden. Zuerst erfolgt eine Korrelation in einem Korrelator 10, dessen Ausgangssignal dann in Fig. 1 unten dargestellt ist. Aus diesem Ausgangssignal läßt sich die Zeitdauer $T_{slot}$ eines Zeitschlitzes ermitteln. Damit ist eine zeitschlitzweise Aufsummierung möglich. Diese Maßnahme ist mit 12 bezeichnet. Es muß jetzt nur noch das Maximum ermittelt werden. Nach dieser Maximumdetektion 14 ist die Zeitlage modulo $T_{slot}$ bekannt. Durch Detektion der Zeitlage der stärksten Spitze ergibt sich die Zeitlage der am stärksten einfallenden Basisstation modulo der Zeitschlitzlänge $T_{slot}$. Um die Zuverlässigkeit dieses Verfahrens zu verbessern, kann das Ausgangssignal des Korrelators über eine Zahl von Zeitschlitzen (slots) aufsummiert werden. Erfindungsgemäß kann die Anzahl dieser Zeitschlitze zwischen 1 und 16 eingestellt werden.

Nachdem die anfängliche Empfangsträgerfrequenz $f_c$ dem mobilen Empfänger unbekannt ist, muß die Zeitschlitzsynchronisation und Hypothesenerprobung für verschiedene Annahmen hinsichtlich der anfänglichen Empfangsfrequenz ausgeführt werden. Um sowohl die Empfangsträgerfrequenz als auch die Zeitlage der am stärksten einfallenden Basisstation zu erhalten, wird erfindungsgemäß ein iteratives Verfahren vorgeschlagen, wie es im folgenden beschrieben ist:

Ausgehend von einer anfänglichen Empfangsträgerfrequenz $f_c$ erzeugt die Zeitschlitzsynchronisation wie oben beschrieben eine Hypothese, die mit einem Bezug auf die entsprechende Empfangsträgerfrequenz $f_c$ gespeichert wird. Die oben beschriebene Zeitschlitzsynchronisation wird dann in n Iteratitionen wiederholt, wobei die Empfangsträgerfrequenz entsprechend der Formel

$$f_{c,n} = f_c + (1\ \text{MHz}) \cdot n$$

verändert wird, bis das gesamte für das entsprechende Mobilfunksystem freigegebene Frequenzspektrum vollständig abgesucht worden ist.

Anschließend an diesen Schritt wird ein Hypothesentest ausgeführt, um den wahrscheinlichsten Kandidaten für die Empfangsträgerfrequenz $f_{c,h}$ mit einer Genauigkeit von etwa $\pm$ 200 kHz zu finden. Die Frequenzermittlung und Zeitschlitzsynchronisation wird dann mit einer Frequenzveränderung von jeweils 100 kHz entsprechend der Formel

$$f_{c,h,n} = f_{c,h} - 300\ \text{kHz} + (100\ \text{kHz}) \cdot n,\ n = 1\ ...5.$$

durchgeführt.

Endlich wird die Hypothesenerprobung um eine korrigierte wahrscheinlichste Empfangsträgerfrequenz $f_{c,hh}$ ausgeführt, die nun bereits mit einer Genauigkeit von $\pm$ 20 kHz bekannt ist, wobei nach der Formel

$$f_{c,hh,n} = f_{c,hh} - 30\ \text{kHz} + (10\ \text{kHz}) \cdot n,\ n = 1\ ...5$$

vorgegangen wird.

Nachdem dieser erste Schritt der anfänglichen Zellsuchprozedur durchgeführt worden ist, ist die Empfangsträgerfrequenz mit einer hinreichenden Genauigkeit ermittelt worden, und eine Zeitsynchronisation konnte aufgebaut werden. Weiter sind die Mengen der aktiven und Kandidaten-Basisstationen identifiziert worden. Dabei ist eine Aufteilung in die bevorzugte Basisstation, die ein Bestandteil der Menge der aktiven Basisstationen wird, und alle anderen Basisstationen vorgenommen worden, die anfänglich der Menge der Kandidatenbasisstationen zugeordnet werden. Somit hat die Menge der aktiven Basisstationen ein Element, während die Menge der Kandidaten-Basisstationen 0 bis 3 Elemente umfassen kann.

Die bevorzugte Basisstation, für die nun der zweite und der dritte Schritt der anfänglichen Zellsuche abgeschlossen werden muß, wird im folgenden von der ersten Suchvorrichtung weiter bearbeitet.

Wenn sich der mobile Empfänger im Leerlaufbetrieb (eingeschaltet, aber ohne daß ein Mobilfunkgespräch geführt wird) befindet, sucht er kontinuierlich nach neuen Basisstationen auf der aktuellen und den benachbarten Empfangsträgerfrequenzen. Auf diese Weise ist der mobile Empfänger in der Lage, sowohl die Menge der Kandidaten-Basisstationen als auch die Menge der aktiven Basisstationen kontinuierlich zu aktualisieren. Die Häufigkeit, mit der diese Zellsuche im Leerlaufbetrieb ausgeführt wird, kann eingestellt werden, um so den Stromverbrauch des Mobilfunkempfängers zu verringern und auf diese Weise die mit einem Akkumulatorinhalt mögliche Bereitschafts (stand by) -Zeit zu erhöhen.

Die Zellsuche im Leerlaufbetrieb erfolgt im wesentlichen wie die anfängliche Zellsuche. Eine Veränderung der Empfangsträgerfrequenz ist jedoch nur im Zeitschlitzbetrieb (slotted mode) zulässig. Somit umfaßt die Zellsuchprozedur im Leerlaufbetrieb folgende Schritte:

- Zeitschlitzsynchronisation wie im Falle der anfänglichen Zellsuchprozedur beschrieben, mit der Ausnahme, daß eine Frequenzsuche nur in der Zeitschlitzbetriebsart (slotted mode) ausgeführt wird,
- Rahmensynchronisation und Codegruppenidentifikation werden nur in dem Fall durchgeführt, wenn als Mitglieder in der Menge der aktiven Basisstationen brauchbare Basisstationen in dem o.g. ersten Schritt der Leerlaufzellsuche identifiziert worden sind und
- Identifikation des Verwürfelungscodes für die Basisstationen aus der Gruppe der aktiven Basisstationen

Wenn sich der mobile Empfänger im aktiven Betrieb befindet, sucht der mobile Empfänger kontinuierlich nach neuen Basisstationen auf der aktuellen Trägerfrequenz. Die Zellsuche wird genauso ausgeführt, wie die Zellsuche im Leerlauf. Der mobile Empfänger kann außerdem auch nach neuen Basisstationen auf anderen Trägerfrequenzen suchen, wenn er die Zeitschlitz-Betriebsart verwendet. Beim Betrieb eines Mobilfunksystems ist stets davon auszugehen, daß die Signale zwischen Basisstation und mobilem Empfänger auf verschiedenen, sich ständig ändernden Pfaden mit unterschiedlicher Pfadlaufzeit von der Basisstation zum mobilen Empfänger gelangen. In einem solchen zeitvarianten Mehrpfadkanal muß die Kanalimpulsantwort geschätzt werden, um eine quasi-kohärente Demodulation in dem RAKE-Empfänger zu erleichtern. Dementsprechend müssen die bedeutsamen Multipad-Komponenten kontinuierlich bestimmt werden. Daher müssen dauernd folgende Maßnahmen durchgeführt werden:

- Identifikation bedeutender Mehrfachpfadkomponenten
- Schätzung der zugehörigen Pfadverzögerungen und
- Schätzung der zugehörigen komplexen Amplituden

Im folgenden wird der erfindungsgemäße Aufbau der für die Ermittlung der Trägerfrequenz relevanten Schaltungen (Hardwarekomponenten) eines erfindungsgemäßen Mobilfunkempfängers dargestellt.

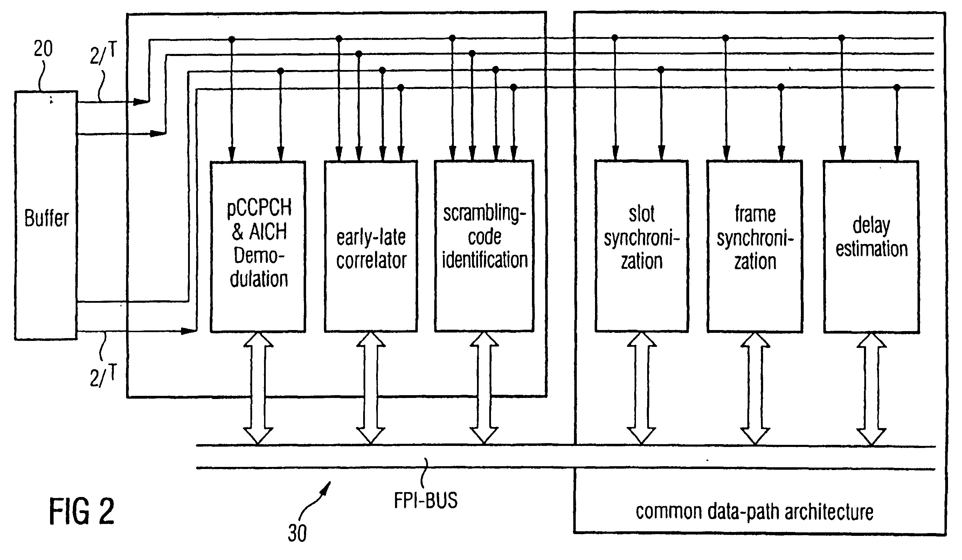

Figur 2 zeigt eine Übersicht über eine Suchvorrichtung eines erfindungsgemäßen Mobilfunkempfängers. Vorzugsweise umfaßt ein Mobilfunkempfänger zwei solche Suchvorrichtungen auf einem Chip. Die Suchvorrichtung 30 ist mit dem selben Puffer 20 verbunden, wie der RAKE-Empfänger. In der Suchvorrichtung erfolgt die Demodulation des gemeinsamen physikalischen Steuerkanals und des Empfangsquittungskanals (Acquisition Indicator channel =AICH), die Zeitlagenkorrelation, die Identifikation des Verwürfelungscodes, die Zeitschlitzsynchronisation, die Rahmensynchronisation und die Schätzung der Pfadverzögerung. Zeitschlitzsynchronisation, Rahmensynchronisation und Verzögerungsschätzung sind in einem gemeinsamen Datenpfad implementiert, wie dies im einzelnen weiter unten beschrieben ist.

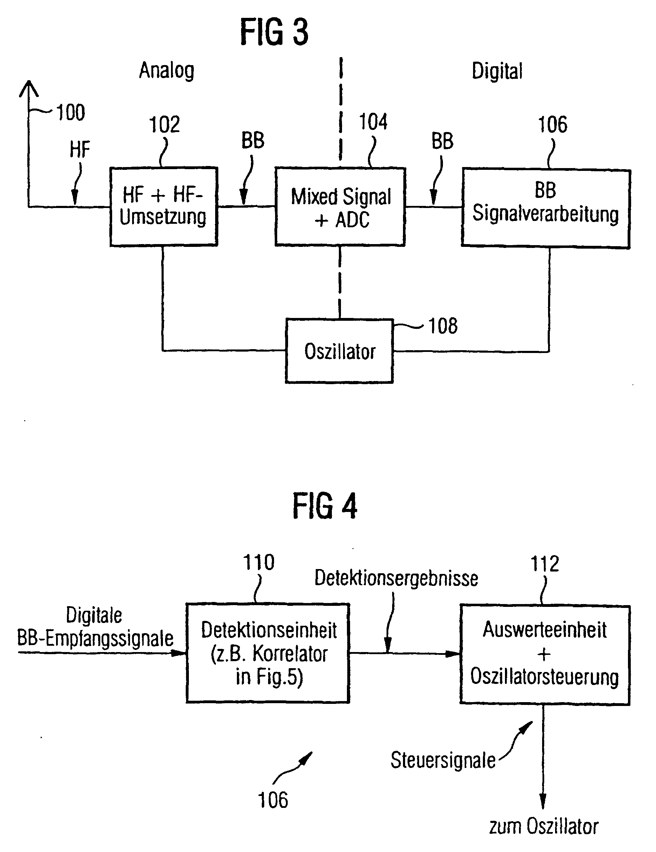

Fig. 3 zeigt eine vereinfachte schematische Darstellung der erfindungsgemäßen Vorrichtung zur Ermittlung der Trägerfrequenz.

Das von der Antenne 100 stammende Hochfrequenzsignal (HF) wird dem analogen Hochrequenzempfänger 102 zugeführt, der auch die HF-Umsetzung auf analoge Breitbanddaten (Brose + Brose) bewirkt.

Diese Daten werden in der Signalmisch- und Wandlereinheit 104 in digitale Breitbanddaten umgewandelt. In dieser Einheit erfolgt die Signalmischung und die Analog-Digital-Umsetzung. Die digitalen Breitbanddaten werden sodann der Breitband-Signalverarbeitung 106 zugeführt, deren Aufbau und Funktion weiter unten im Bezug auf Fig. 4 dargestellt ist. Von der Breitband-Signalverarbeitung 106 wird auch der Oszillator 108 gesteuert, der die für die Hochfrequenzumsetzung im Hochfrequenzteil 102 erforderliche Hilfsfrequenz liefert.

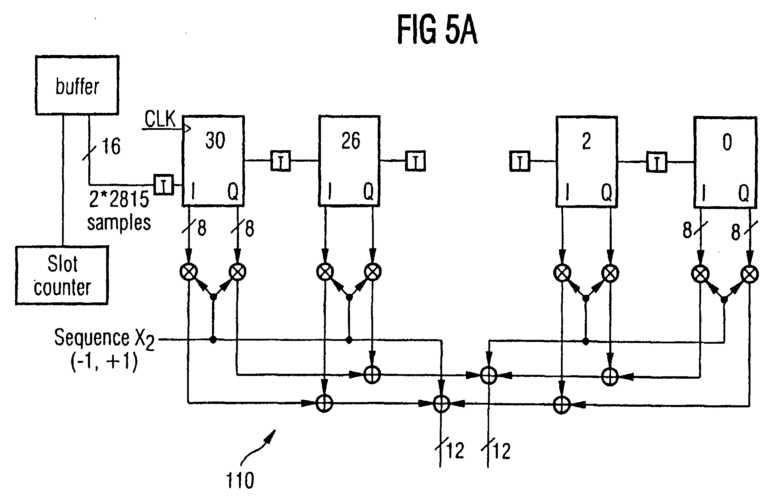

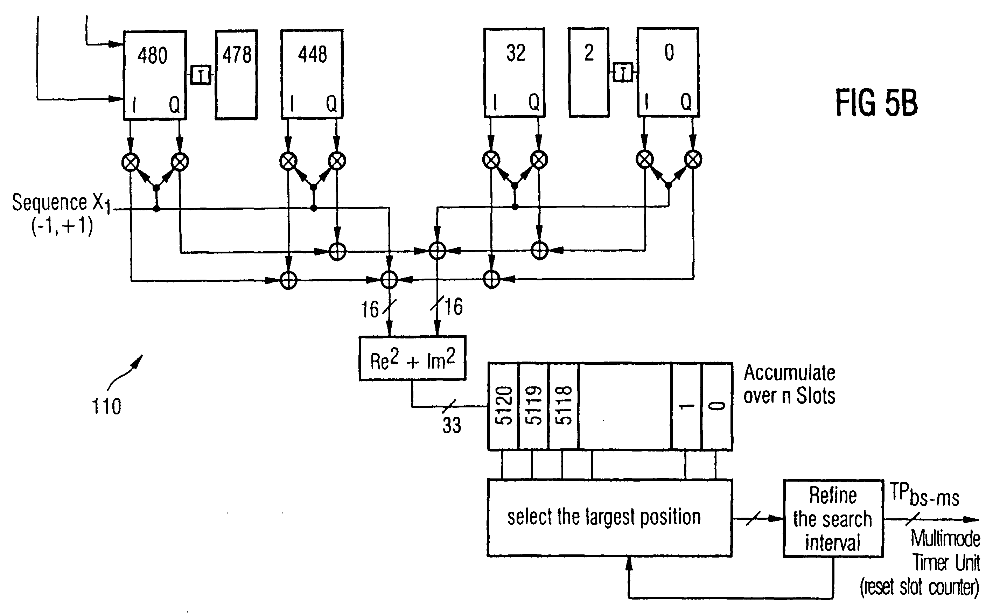

Der Aufbau der Breitband-Signalverarbeitung 106 ist in Fig. 4 im einzelnen dartgestellt. Das digitale Breitband-Empfangssignal wird dabei einer Detektionseinheit 110 zugeführt. Dabei kann es sich beispielsweise um den in Fig. 5 dargestellten schnellen Korrelator handeln. Die Detektionsergebnisse dieser Detektionseinheit 110 werden einer Auswerteeinheit 112 zugeführt, die gleichzeitig eine Oszillatorsteuerung enthält, die die Steuersignale für den Oszillator 108 liefert.

Aufbau und Funktion des als Detektionseinheit 110 zu verwendenden Korrelators ist weiter unten im Hinblick auf Fig. 5 erläutert.

Nach dem ersten und dem zweiten Schritt der anfänglichen Zellsuche ist die Information über die Zeitschlitz-Synchronisation, Rahmen-Synchronisation und die örtliche zellspezifische Codegruppe (die 16 verschiedene Verwürfelungscodes umfaßt) verfügbar. Somit hat die auf den gemeinsamen physikalischen Hauptsteuerkanal gestützte Zeitschlitz- und Rahmenzählung begonnen.

Während des ersten Schrittes der anfänglichen Zellsuchprozedur benutzt der mobile Empfänger den Hauptsynchronisationskanal (pSCH), um die Zeitschlitzsynchronisation zur am stärksten einfallenden Basisstation zu erreichen. Dies erfolgt durch schnelle Korrelation. Nachdem der Code für den Hauptsynchronisationskanal (pSCH) aus hierarchischen Korrelationssequenzen erzeugt ist, wird eine Zweischritt-Korrelation zur Zeitschlitzsynchronisation verwendet.

Fig. 5 zeigt eine Übersicht über diesen Block. Der Ausgang des Korrelators wird Spitzen für jeden Strahl einer jeden Basisstation innerhalb der Reichweite des mobilen Empfängers aufweisen. Eine Detektion der Position der stärksten Spitze gibt die Zeitlage der stärksten Basisstation modulo der Zeitschlitzlänge. Wenn r(i) als empfangenes Signal im Inphase- und Quadraturzweig gegeben ist, werden die Korrelationswerte auf folgende Weise aufgebaut:

$$P(k) = \left| \sum_{i=0}^{1} X_1(i) \cdot \left\{ \sum_{i=0}^{15} X_2(j) \cdot \underline{r}(16 \cdot i + j + k) \right\} \right|, \qquad k = 0...2559$$

Das doppelt aufgemusterte empfangene Signal in dem Inphase (I-) und Quadratur (Q-) Zweig wird zuerst in ein 32 Schritte langes Schieberegister eingeführt. Jedes zweite Muster wird mit der zweiten 16 Schritte umfassenden Sequenz $X_2$ korreliert. Das Ergebnis dieser Berechnung wird an ein 482 Schritte langes Schieberegister übertragen. In dieser Stufe wird nur jeder 32. Wert mit der ersten Sequenz $X_1$ korreliert. Der Absolutbetrag des Ausgangssignals der zweiten Stufe umfaßt eine der Entscheidungsvariablen. Die erhaltenen 5120 Werte werden über eine einstellbare Anzahl n von Zeitschlitzen gesammelt. Dies geschieht, um eine zuverlässigere Schätzung des Zeitschlitzbeginns zu erhalten, da verschiedene Basisstationen den Synchronisationskanal übertragen und die Empfangsstärke von deren Signalen am mobilen Empfänger über die Zeit veränderlich sein kann.

Um Rechenzeit zu sparen, ist es außerdem möglich, das Korrelationsintervall zu reduzieren. Nach Verarbeitung von einer Anzahl $n_1$ von Zeitschlitzen und nach Erreichen einer groben Synchronisation muß die weitere Korrelation nur noch für eine Anzahl M von Mustern um den gefundenen Maximalwert herum durchgeführt werden.

Die Zellsuchfunktionen wie Zeitschlitzsynchronisation, Rahmensynchronisation, Verzögerungsschätzung aufgrund des Hauptsynchronisationskanals pSCH, und die Verzögerungsschätzung auf der Basis des physikalischen gemeinsamen Hauptsteuerkanals pCCPCH beruhen auf ähnlichen arithmetischen Prozeduren wie z.B. Summierung, Zweierkomplementbildung und Wurzelziehen.

Demgemäß wird erfingungsgemäß die Verwendung einer zentralen Recheneinheit (Searcher-Datapath) vorgeschlagen, die im Zeitmultiplex verwendet werden kann. Diese Recheneinheit Searcher-Datapath wird von finiten Zustandsmaschinen angetrieben, die die Adressen der Eingangsdaten, die Adressen der verwendeten Korrelationswerte, die Steuer- und Freigabesignale für den Datenpfad und die Adressen der Zwischenergebnisse liefern. Für jede der o.g. Anwendungen ist eine finite Zustandsmaschine vorhanden. Die Recheneinheit Searcher-Datapath muß schnell genug sein, um eine Zeitschlitzsynchronisation in Übereinstimmung mit der Aktualisierung des Zuführungs-RAM (zyklischer Buffer) zu verwirklichen. Das bedeutet, daß die Recheneinheit eine Unterfunktion, die bestimmte Eingangswerte verwendet, beendet haben muß, bevor diese Eingangswerte in dem zyklischen Buffer aktualisiert werden. Andernfalls muß das Zuführungs-RAM (= der Zuführungs-Schreib-Lesespeicher) unnötig erweitert werden. Als Beispiel nehmen wir ein Zuführungs-RAM, welches einen halben Zeitschlitz an Daten (3 k x 16 Bit) faßt. Nachdem das Zuführungs-RAM als zyklischer Buffer ausgebildet ist, werden die Eingangsdaten nach dem Zeitabstand eines halben Zeitschlitzes aktualisiert. Das bedeutet, daß die Zeitschlitzsynchronisation innerhalb des Zeitintervalls eines Zeitschlitzes hergestellt werden muß.

**Patentansprüche**

1. Verfahren zur Ermittlung der Trägerfrequenz von Basisstationen im mobilen Empfänger eines mit W-CDMA arbeitenden zellularen Mobilfunksystems, **dadurch gekenn-zeichnet, daß** zuerst die Trägerfrequenz des Haupt-Synchronisationskanals und die Zeitsynchronisation der Basisstationen gesucht wird, indem:

   - eine Trägerfrequenz-Hypothesierung mit einer Anfangs-Schrittweite benachbarter Trägerfrequenzen vorgenommen wird,
   - für die Mehrzahl von hypothetischen Trägerfrequenzen eine nicht kohärente Korrelation der Inphase-(I-) und Quadratur- (Q-) Komponente des Empfangssignals mit dem Hauptsynchronisationscode über eine sehr große Anzahl von Codeelementen des Signals durchgeführt wird und

- die Trägerfrequenz-Hypothesierung mithilfe eines iterativen Verfahrens durch Bestimmung einer wahrscheinlichsten Trägerfrequenz und Verkleinerung der Schrittweite verfeinert wird.

**2.** Verfahren nach Anspruch 1, **dadurch gekenn-zeichnet, daß** durch Ermittlung des Maximalwertes der Spitzen im Ausgangssignal der Korrelation die Zeitsynchronisation der am stärksten einfallenden Basisstation modulo der Zeitrahmen-(slot-)länge gewonnen wird.

**3.** Verfahren nach Anspruch 1 oder 2, **dadurch ge-kennzeichnet, daß** die iterative Suche nach dem Hauptsynchronisationskanal zuerst in groben Frequenzschritten durchgeführt wird, wobei die Energie des Korrelationsergebnisses in Abständen von jeweils etwa 1 MHz gemessen wird, und sodann das Band mit der höchsten Energie ausgewählt wird, und dieses in Abständen von jeweils etwa 100 kHz gemessen wird, und wiederum das Band mit der höchsten Energie ausgewählt wird, welches dann mit Abständen von jeweils etwa 10 kHz gemessen wird, und der Wert mit der höchsten Energie als Hypothese für die Empfänger-Trägerfrequenz ausgewählt wird.

**4.** Verfahren nach einem der Ansprüche 1 bis 3, **dadurch gekennzeichnet, daß** die Korrelation über 2560 Codeelemente des Signals durchgeführt wird.

**5.** Verfahren nach einem der Ansprüche 1 bis 4, **dadurch gekennzeichnet, daß** nach Ermittlung der Trägerfrequenz des Haupt-Synchronisationskanals und der Zeitsynchronisation der am stärksten einfallenden Basisstation anhand des Neben-Synchronisationskanals die Rahmensynchronisation und die Codegruppe dieser Basisstation ermittelt wird.

**6.** Vorrichtung zur Ermittlung der Trägerfrequenz von Basisstationen für einen mobilen Empfänger eines mit W-CDMA arbeitenden zellularen Mobilfunksystems, mit mindestens einer entsprechenden Suchvorrichtung (30), die Vorrichtungen zur Demodulation des physikalischen gemeinsamen Hauptsteuerkanals, zur Korrelation der verschiedenen Pfadlaufzeiten, zur Identifikation des Verwürfelungscodes, zur Ermittlung der Zeitrahmensynchronisation und zur Schätzung der Signallaufzeit umfaßt, **dadurch gekennzeichnet, dass** sie zur Ausführung aller Schnitte des Verfahrens des Anspruchs 1 ausgelegt ist

**7.** Vorrichtung nach Anspruch 6, **dadurch gekennzeichnet**, daß zwei Suchvorrichtungen vorgesehen sind.

**Claims**

**1.** Method for determining the carrier frequency of base stations in the mobile receiver in a cellular mobile radio system using W-CDMA, **characterized in that**, firstly, the carrier frequency of the primary synchronization channel and the time synchronization of the base stations is searched for by:

- producing a carrier frequency hypothesis with an initial step width between adjacent carrier frequencies,
- carrying out a non-coherent correlation of the in-phase (I) and quadrature (Q) component of the received signal with the primary synchronization code over a very large number of chips of the signal for the majority of hypothetical carrier frequencies, and
- refining the carrier frequency hypothesis with the aid of an iterative method by determination of the most probable carrier frequency and by reducing the step width.

**2.** Method according to Claim 1, **characterized in that** the time synchronization of the strongest received base station is obtained modulo the slot length by determining the maximum value of the peaks in the output signal of the correlation.

**3.** Method according to Claim 1 or 2, **characterized in that** the iterative search for the primary synchronization channel is first carried out using coarse frequency steps, with the energy of the correlation result being measured at intervals of in each case about 1 MHz, and with the band having the highest energy then being selected and being measured at intervals of in each case about 100 kHz, with the band having the highest energy once again being selected and then measured at intervals of in each case about 10 kHz and with the value having the highest energy being selected as the hypothesis for the receiver carrier frequency.

**4.** Method according to one of Claims 1 to 3, **characterized in that**, the correlation is carried out over 2560 chips of the signal.

**5.** Method according to one of Claims 1 to 4, **characterized in that**, after the carrier frequency of the primary synchronization channel and the time synchronization of the strongest received base station have been determined, the frame synchronization and the code group of this base station are determined by means of the secondary synchronization channel.

**6.** Device for determining the carrier frequency of base stations for a mobile receiver in a cellular mobile radio system using W-CDMA, having at least one corresponding search device (30) which comprises devices for demodulating the physical common primary control channel, for correlating the various path delays, for identifying the scrambling code, for determining the slot synchronization and for estimating the signal delay, **characterized in that** the device is designed to carry out all the steps in the method in Claim 1.

**7.** Device according to Claim 6, **characterized in that** two search devices are provided.


**Revendications**

**1.** Procédé pour déterminer la fréquence porteuse de stations de base dans le récepteur mobile d'un système radiotéléphonique cellulaire fonctionnant en W-CDMA, **caractérisé en ce que** d'abord on recherche la fréquence porteuse du canal de synchronisation principal et la synchronisation temporelle des stations de base, en :

- procédant à une mise en hypothèse de fréquence porteuse avec un pas opératoire initial de fréquences porteuses voisines,
- effectuant pour la pluralité de fréquences porteuses hypothétiques, une corrélation non cohérente de la composante en phase (I) et de la composante en quadrature (Q) du signal de réception avec le code de synchronisation principal par l'intermédiaire d'un très grand nombre d'éléments de code du signal, et
- affinant la mise en hypothèse de la fréquence porteuse à l'aide d'un procédé par itération, par détermination d'une fréquence porteuse la plus probable et une diminution du pas opératoire.

**2.** Procédé suivant la revendication 1, **caractérisé en ce que** la synchronisation temporelle de la station de base apparaissant le plus fortement est obtenue par détermination de la valeur maximale des crêtes dans le signal de sortie modulo la longueur du créneau temporel (slot).

**3.** Procédé suivant la revendication 1 ou 2, **caractérisé en ce que** la recherche itérative du canal de synchronisation principal est effectuée d'abord à des pas de fréquence grossiers, l'énergie du résultat de la corrélation étant mesurée à des intervalles d'environ 1 MHz, et ensuite la bande ayant l'énergie la plus élevée est choisie, et celle-ci est mesurée à des intervalles d'environ 100 kHz, et ensuite, il est sélectionné de nouveau la bande ayant l'énergie la plus élevée qui est alors mesurée à des intervalles d'environ 10 kHz.

**4.** Procédé suivant l'une des revendications 1 à 3, **caractérisé en ce que** la corrélation est effectuée sur 2560 éléments de code du signal.

**5.** Procédé suivant l'une des revendications 1 à 4, **caractérisé en ce que**, après détermination de la fréquence porteuse du canal de synchronisation principal et la synchronisation temporelle de la station de base apparaissant le plus fortement, il est déterminé à l'aide du canal de synchronisation secondaire, la synchronisation de trame et le groupe de codes de cette station de base.

**6.** Dispositif pour déterminer la fréquence porteuse de stations de base pour un récepteur mobile d'un système radiotéléphonique cellulaire fonctionnant en W-CDMA, comportant au moins un dispositif (30) de recherche correspondant, qui comporte des dispositifs pour la démodulation du canal de commande principal commun physique, pour la corrélation des divers temps de parcours de voie, pour l'identification du code de hâchage, pour la détermination de la synchronisation de créneaux temporels et pour l'estimation du temps de propagation du signal, **caractérisé en ce que** il est conçu pour la mise en oeuvre de toutes les étapes du procédé de la revendication 1.

**7.** Dispositif suivant la revendication 6, **caractérisé en ce que** sont prévus deux dispositifs de recherche.

FIG 1

Timing modulo $T_{slot}$

Two rays from $BS_i$    One ray from $BS_j$

FIG 2

20

2/T

Buffer

2/T

pCCPCH & AICH Demo-dulation

early-late correlator

scrambling-code identification

slot synchroni-zation

frame synchroni-zation

delay estimation

FPI-BUS

30

common data-path architecture

EP 1 249 079 B1

10

# FIG 3

Analog　　　　　　　　　　　Digital

100

HF

102 — HF + HF-
Umsetzung

BB

104 — Mixed Signal
+ ADC

BB

106 — BB
Signalverarbeitung

108 — Oszillator

# FIG 4

110 — Detektionseinheit
(z.B. Korrelator
in Fig.5)

Digitale
BB-Empfangssignale

Detektionsergebnisse

112 — Auswerteeinheit
+
Oszillatorsteuerung

Steuersignale

zum Oszillator

106

FIG 5A

**FIG 5B**

480 | 478 | 448 | 32 | 2 | 0

I  Q | I  Q | I  Q | I  Q

Sequence $X_1$
(-1,+1)

$Re^2 + Im^2$

16 / 16

33

110

| 5120 | 5119 | 5118 | | 1 | 0 |

Accumulate
over n Slots

select the largest position

Refine
the search
interval

$TP_{bs-ms}$

Multimode
Timer Unit
(reset slot counter)